Europäisches Patentamt

European Patent Office

Office européen des brevets

(19)

(11) Publication number: **0 024 833**
A1

## (12) EUROPEAN PATENT APPLICATION

(21) Application number: 80302669.9

(22) Date of filing: 05.08.80

(51) Int. Cl.³: **B 29 C 27/02**
B 29 C 27/06, B 42 F 5/02
B 42 C 9/00, B 42 F 7/00

(30) Priority: 23.08.79 GB 7929391
19.12.79 GB 7943803

(43) Date of publication of application:
11.03.81 Bulletin 81/10

(84) Designated Contracting States:
AT BE CH DE FR GB IT LI LU NL SE

(71) Applicant: Lawes, Michael John Anthony
Slipe Twineham Lane Twineham
Haywards Heath West Sussex(GB)

(72) Inventor: Lawes, Michael John Anthony
Slipe Twineham Lane Twineham
Haywards Heath West Sussex(GB)

(74) Representative: Kirby, Harold Douglas Benson et al,
G.F. Redfern & Company Marlborough Lodge 14
Farncombe Road
Worthing West Sussex BN11 2BT(GB)

(54) Elements of synthetic plastics material and methods for forming such elements.

(57) An element comprises two superimposed sheets (1,2) of synthetic plastics material (such as transparent polyester) bonded together along a path (3) by a plurality of bond line segments extending along at least one material edge transversely of the longitudinal centre line of the path.

The bond line segments may be weld segments. The bond segments may be continuous as illustrated, but alternatively they may be formed by edge material bordering a plurality of penetration points.

Where at least the upper sheet (1) is transparent and element constructed as described may be utilised as a collector's mounting device for postage stamps or like flat articles.

The lower sheet (2) may constitute an album leaf.

Fig. 1.

Croydon Printing Company Ltd.

## ELEMENTS OF SYNTHETIC PLASTICS MATERIAL AND METHODS FOR FORMING SUCH ELEMENTS

The present invention relates to elements comprising two superimposed sheets of synthetic plastics material bonded together and to methods for forming such elements.

Postage stamps and other similar flat objects are often mounted for display between two strips of synthetic plastics sheeting or film. These strips are usually joined along one edge to form a mounting arrangement either by ultrasonic or high frequency welding, by an adhesive, or by welding with a heated tool or wire, or with solvent.

Ideally the choice of material would always be dictated by the requirements of the product to be mounted, but often in practice the choice is limited by economic factors and limitations in the manufacturing process such as may be imposed by the material itself.

Postage stamps are very susceptible to damage and if the material of the mounting is not completely inert and water repellant damage to a stamp mounted therein may be caused. Furthermore, where the strips of sheet material are secured together by an adhesive, the danger exists that the adhesive may creep from the edge region and contaminate the stamp.

A known postage stamp mounting arrangement consists of two strips of polystyrene film joined along one edge by a thin line of adhesive between the adjacent film surfaces. Placing of the adhesive between the surfaces (rather than at the edge) has the advantage that the surfaces tend to return more readily together when in use.  This feature is known as "spring back".
Thus this known mounting  suffers from the disadvantage
of requiring the use of a possible contaminant (the adhesive).
Furthermore, the upper strip of the arrangement tends to split
in use along the edge of the adhesive joint.  Thus, the width
of the adhesive zone does not contribute to the strength
of the article, although it does assist in achieving spring back.

The use of a weldable film and a surface to surface weld
removes the need for an adhesive, but plasticised weldable
films are not sufficiently inert to prevent any risk of damage
to a stamp.

A film made of poly(ethylene terephthalate) would be
suitable from this point of view since this material is highly
chemically stable and inert.  This polyester also has excellent
mechanical properties including tear resistance.  However,
polyester is normally regarded as an unweldable material, since
if normal welding is attempted the resulting joints are very
brittle.  Such a welded joint would be quite unsuitable for
producing a mounting arrangement, e.g. for postage stamps.

In the following, the term "serpentine path" is intended
to be broad enough to cover a jagged, zig-zag or undulating
path whether continuous or not.

According to one aspect of the invention, there is provided
an element comprising two superimposed sheets of synthetic plastics
material bonded together characterised in that the sheets are
bonded along a path by a plurality of bond line segments
extending along at least one material edge transversely of the
longitudinal centre line of the path.

Said bond line segments may be weld segments.

Each line segment may be arcuate.

In one embodiment, the line segments are formed by edge material bordering a plurality of penetration points.

In another embodiment, the segments lie on a serpentine path, which may be continuous.

The synthetic plastics material may be polyester e.g. poly(ethylene terephthalate).

The sheets may be bonded together along at least one edge zone thereof.

At least one of said sheets may be of synthetic plastics film.

There may be provided a plurality of spaced, parallel bond paths defining at least one sleeve.

The or at least one sleeve may have one of its side walls severed for the length of the sleeve so that the side wall in question can be hinged away from the other side wall.

The or each sleeve may be divided into individual pockets by at least one further bond path extending transversely of the sleeve-defining bond paths.

One of the sheets may be considerably thinner than the other.

In one embodiment, there are provided three super-imposed sheets, the central one being considerably thicker and stiffer than the others.

According to a further aspect of the invention, there is provided a method of forming an element of synthetic plastics material in which two sheets of synthetic plastics material are superimposed and then bonded together characterised in that the sheets are bonded along a path by a plurality of bond line segments extending along at least one material edge transversely of the longitudinal centre line of the path.

Said bond line segments may be formed by welding.

In one method, the segments are formed by penetrating the material by a plurality of heated tool elements.

In a further method, the segments are formed by penetrating the material by an elongate serpentine heated tool edge.

Said tool elements may be pins, or hollow punches.

The tool elements may be mounted circumferentially of a circular rotatable tool and extend radially thereof.

Two superimposed sheets of material may be continuously bonded by feeding past said tool.

For a better understanding of the invention, and to show how the same may be carried into effect, reference will now be made, by way of example, to the accompanying drawing in which:-

Figure 1 is a perspective view of a mounting strip;

Figure 2 is an enlarged view of a portion of the strip of Figure 1 showing an edge weld;

Figure 3 is a view similar to that shown in Figure 2 but showing an alternative form of edge weld;

Figure 4 shows a mounting strip with an alternative form of weld;

Figure 5 is an enlarged view of a portion of Figure 4 showing the weld;

Figures 6 and 7 are views corresponding to Figure 5 but showing alternative forms of weld; and

Figure 8 is a schematic illustration of an album leaf showing two alternative forms of mounting arrangement.

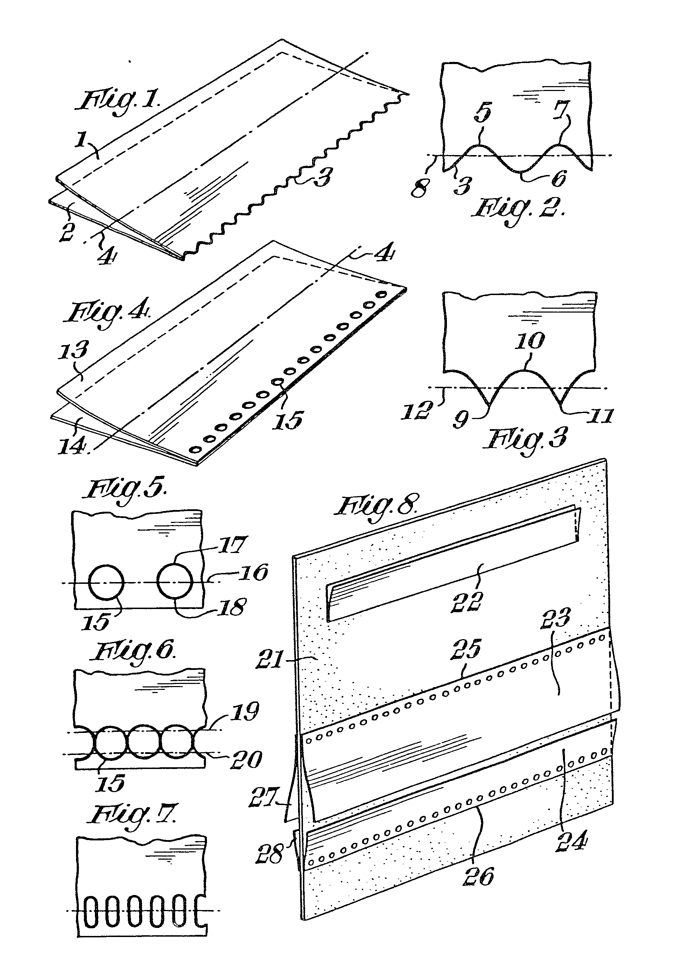

Figure 1 shows two sheets 1 and 2 of poly(ethylene terephthalate) in the form of a film. The two sheets 1 and 2 are welded together along one edge by a weld 3. It will be seen that the path of the weld is generally serpentine, whereas the longitudinal centre line of the path of the welded join is parallel to the longitudinal axis 4 of the strip. The strip may be used for mounting flat articles such as postage stamps between the sheets 1 and 2. To allow viewing of the article, at least the upper sheet 1 will be transparent. The lower sheet 2 may be provided with an adhesive on its outer surface for securing the strip in position, for example in an album.

Referring now to Figure 2, the weld 3 is shown in more detail. It will be seen that between point 5 and point 6 there is a portion of weld extending transversely of the longitudinal centre line 8 of the weld 3. Similarly, between point 6 and point 7 a further portion of weld extends transversely of the line 8. This feature not only adds greatly to the strength of the welded join, but also acts to improve spring back of the mounting strip. If the weld 3 were rectilinear along the edge of the strip, spring back would be practically non-existent.

Figure 3 shows an alternative form of weld where again between a point 9 and a point 10 and between point 10 and a point 11 portions of weld are shown to extend transversely of the of the longitudinal centre line of the path of the welded join.

Figure 4 shows an alternative form of mounting strip in which an upper sheet 13 and a lower sheet 14 of poly(ethylene terephthalate) are secured together along a path at one edge thereof by weld segments formed by a plurality of penetration points 15. The path of the welded join extends parallel to the longitudinal central axis 4 of the mounting strip. Each weld 15 borders a small aperture passing entirely through both sheets 13 and 14. The periphery of the aperture is constituted by a welded material edge.

Referring to Figure 5, the longitudinal centre line 16 of the path of the join is illustrated. Between point 17 and point 18, two weld segments extend transversely of this centre line 16. Circular welds formed in this manner have relatively high strength, and also provide the mounting strip with good spring back properties. A contribution to spring back is also made by the fact that the welds 15 are each positioned inwards of the edge of the strip so that a thin zone of material is present between the path of the welded join and the adjacent edge of the strip.

Figure 6 shows an alternative form of welded join where the individual welds 15 are closely adjacent so that the individual weld zones merge. This produces in effect two serpentine weld paths analogous to that shown in Figure 3. Each of the serpentine weld paths has a respective centre line 19 or 20. In each of the serpentine welds, weld segments may be and 24 illustrated in Figure 7. Upper and lower portions 27 and 28 are also visible on the other side of the illustrated album leaf 21. The mounting arrangement comprising portions 23 and 24 may be constructed by welding a single strip of thermoplastic film to a sheet of thermoplastic material which is to serve as the album leaf. The strip will be welded along two opposed edges and the strip will then be severed along its entire length parallel to the welded joins to produce the two portions 23 and 24. It is also possible to omit the severing step in order to produce an elongate sleeve in which, for example, photographic negatives may be stored. An album leaf may be provided with a plurality of such elongate sleeves over its entire height. It is also possible to make such sleeves in the manner illustrated in Figures 1 to 6, where both the upper and lower portions of the sleeves are of thermoplastic film. One merely has to place welds 3 or 15 on two opposed edges of the strip.

It is also possible to construct an element by superimposing three sheets of polyester and welding them together, preferably along a plurality of parallel, spaced paths. Such an element may serve as a leaf for example in a stamp album or a photograph album. The central sheet will preferably be thicker than the outer sheets to provide a degree of stiffness to the element.

Where one or more sleeves are formed as described above, it is possible to divide each sleeve into individual pockets, for example by providing a weld path or weld paths perpendicular discerned which pass transversely of the respective centre line 19 or 20, in a manner analogous to that illustrated in Figure 3.

In the embodiments of Figures 4 to 6, the welds 15 have been illustrated as substantially circular. However, this is not essential, since the apertures may be elongate either in a direction parallel to the longitudinal centre line of the path of the welded join, or in a direction perpendicular to this centre line, as shown in Figure 7.

Figure 8 illustrates a leaf 21 such as may be used in an album. A mounting strip 22 is illustrated attached to the page 21. This mounting strip 22 may be of the type shown in Figure 1 or the type shown in Figure 4. Where the page is to receive such a mounting strip, it may be of the usual thick paper or card. Referring to the lower part of the illustrated leaf, a different type of mounting element is illustrated. It comprises an upper part 23 and a lower part 24. The upper part 23 is joined to the page along a line 25 and the lower part 24 is joined to the page along a line 26. Both the joins along lines 25 and 26 may be of the type shown in Figure 5. For this to be possible, the leaf 21 must, of course, itself be constituted of synthetic plastics material, preferably a polyester such as poly(ethylene terephthalate). However, in order to function adequately as an album leaf, it must clearly be considerably thicker and therefore stiffer than the polyester film material utilised in the embodiments of Figures 1 to 6, and in the portions 23 to the sleeve-defining paths. For example, two superimposed sheets welded transversely to define sleeves may be further welded by a centrally running weld path perpendicular to the transverse paths. Sleeves may also be closed at one or both ends by a weld path or weld paths perpendicular to the sleeve edges.

Normally, the longitudinal centre line of the paths of the welded joints will be generally rectilinear. However, within the scope of the invention, the path may be of any shape, for example circular or part circular or undulating.

The welding may be carried out by a heated suitably shaped tool. In the case of the embodiment of Figures 1 to 3, a serpentine heated knife-edge, or a serpentine heated wire may be used. For the embodiment of Figures 4 to 6, it is possible to use a plurality of elongate tool elements such as pins with their axes parallel and coplanar, and the points of the elements in a common plane. Heat is applied to the elements and they are caused to penetrate the polyester material at a plurality of individual penetration points disposed in a line. As a result of this penetration, a serpentine weld path may be produced by the merging of the individual weld zones associated with respective elements, as shown in Figure 6.

The use of a serpentine knife-edge or wire will normally result in severing of the thermoplastic material. However, the use of a plurality of elongate elements such as pins as described above may either severe the film during the welding process, or may leave a semi-severed region along which the film may subsequently be parted.  If the pins are spaced apart, no severing will of course result, as shown in Figure 5.  This latter possibility is of course expedient when welding thermoplastics film to a thicker sheet of thermoplastics material which is to serve as an album leaf.

The elongate tool elements or pins may be provided on a circular tool, with the axes of the elements or pins extending radially.  Alternatively, a serpentine edge may be provided on a circular tool, e.g. by engraving. Such tools may be applied to two superimposed polyester film strips to produce continuous welded joints parallel to the strip edges.  Blades or circular knives can then be used to severe the film along or between and parallel to the joints.  The resulting strips may be cut transversely to produce a plurality of items.

Where an elongate heated tool edge such as a serpentine knife-edge is used, two elongate strips of polyester material may be fed from respective reservoirs of strip material in superimposed fashion past the welding tool.  The strips may then be welded transversely by the welding tool, thus producing a plurality of welded joints in a continuous production method. If desired, the film may be severed by means of a knife or the like at positions intermediate successive weld joints, thus producing items consisting of two superimposed sheets of polyester film welded together along one edge only.

Although the term " welding" has been used hereinbefore in respect of joints formed between sheets of polyester, it will be apparent that this is not welding in the normal sense of the word since some disintegration of the film will take place during the joint formation.

The welds illustrated in Figures 1 to 6 are each formed by a plurality of arcuate weld segments. This is not, however, an essential feature of the invention. Within the scope of the invention, the welds may be formed by a plurality of rectilinear segments which may be in the form of a zig-zag.

Although this specification is particularly concerned with the problem of welding polyester material, for example poly(ethylene terephthalate), the scope of the invention is not restricted to the use of such material. The strength of joints between sheets of any synthetic plastics material could be improved by means of the methods herein described. However, it will be appreciated that since polyester has a relatively high melting point, its initial cooling after a heat-welding operation is relatively rapid.

Furthermore, the invention is not restricted to elements having welded joints formed by application of heat. By use of a volatile solvent such as xylene, a synthetic plastics material sheet may be softened along a path and then bonded to a further sheet by application of pressure. The resulting join consists of a line of fused material.

It is also possible to manufacture elements within the scope of the invention without welding by utilising an adhesive.

Whether using an adhesive or a solvent, the sheets of material can be initially cut to any of the shapes shown in Figures 1 to 7 and then bonded together along bond line segments corresponding to the illustrated weld segments.

The mounting strips illustrated in Figures 1 to 7 may have an overall thickness less than that of a postage stamp.

CLAIMS:-

1.    An element comprising two superimposed sheets (1,2,13, 14) of synthetic plastics material bonded together characterised in that the sheets are bonded along a path by a plurality of bond line segments extending along at least one material edge transversely of the longitudinal centre line (8,12,16,19,20) of the path.

2.    An element according to claim 1 wherein said bond line segments are weld segments.

3.    An element according to claim 1 or 2 characterised in that each line segment is arcuate.

4.    An element according to claim 3 characterised in that the segments are formed by edge material bordering a plurality of penetration points (15).

5.    An element according to any one of claims 1 to 4 characterised in that the segments lie on a serpentine path (3).

6.    An element according to claim 5 characterised in that the path is continuous.

7.      A method of forming an element of synthetic plastics material in which two sheets of synthetic plastics material are superimposed and then bonded together characterised in that the sheets are bonded along a path by a plurality of bond line segments extending along at least one material edge transversely of the longitudinal centre line of the path.

8.      A method according to claim 7 in which said bond line segments are formed by welding.

9.      A method according to claim 8 characterised in that the bond line segments are formed by penetrating the material by a plurality of heated tool elements.

10.     A method according to claim 8 characterised in that the segments are formed by penetrating the material by an elongate serpentine heated tool edge.

0024833

Fig.1.

Fig.2.

Fig.3

Fig.4.

Fig.5.

Fig.6.

Fig.7.

Fig.8.

0024833

**European Patent Office**

**EUROPEAN SEARCH REPORT**

Application number

EP 80 30 2669

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | FR - E - 83 640/1 359 085 (HAMAC-HANSELLA) <br> * Wholly * | 1-3, 5-10 | B 29 C 27/02 <br> 27/06 <br> B 42 F 5/02 <br> B 42 C 9/00 <br> B 42 F 7/00 |
| X | FR - A - 1 411 000 (LA GUERRE) <br> * Wholly * | 1-4, 7-9 | |
| X | FR - A - 1 500 049 (UNION CARBIDE) <br> * Abstract; figures 2b and 2c * | 1-3, 7-9 | |
| X | GB - A - 1 025 963 (PIRELLI) <br> * Wholly * | 1-3, 5-10 | |

**TECHNICAL FIELDS SEARCHED (Int. Cl.³)**

B 29 C

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 04-12-1980 | MEULEMANS |

EPO Form 1503.1 06.78